# EUROPEAN PATENT SPECIFICATION

(11) **EP 2 059 025 B1**
(45) Date of publication and mention of the grant of the patent: **13.06.2012**
(21) Application number: 08253531.1
(22) Date of filing: 29.10.2008
(51) Int. Cl.: H04N 5/232, G03B 17/20

(54) **Image pickup apparatus and image pickup control method**
Bildaufnahmevorrichtung und Bildaufnahmesteuerungsverfahren
Appareil et procédé de capture d'images

(30) Priority: 09.11.2007 JP 2007291536
(43) Date of publication of application: 13.05.2009
(73) Proprietor: Ricoh Company, Ltd., Tokyo 143-8555 (JP)
(72) Inventor: Himuro, Keiji, Tokyo (JP); Higuchi, Hiroyuki, Tokyo (JP)
(74) Representative: Leeming, John Gerard

(56) References cited:
- US-A- 5 499 074
- US-A- 5 625 848
- US-A1- 2003 063 200
- US-A1- 2004 201 772
- US-A1- 2005 275 725
- US-A1- 2006 044 399

## Description

The present invention relates to an image pickup apparatus and an image pickup control method.

In recent years, various sensors not installed conventionally are beginning to be installed in digital cameras. For example, when an acceleration sensor that can discern the direction of gravity is installed, apparatus directions (positioning postures) of a camera can be detected when photographing (photographing in a horizontal position or photographing in a vertical position). Such apparatus direction information when photographing is recorded within an image file or corresponding to an image file. A specification in which the play images are automatically rotated to be displayed utilizing the recorded information or the like (the apparatus direction when playing is generally a horizontal position, images photographed in vertical positions are generally displayed tilted 90 degrees either to the left or to the right but by rotating these images 90 degrees, these images can be displayed in the same direction as the direction during the time of photographing even when the viewing apparatus is still situated horizontally) is already implemented in a few digital cameras.

In addition, in another conventional technology, for example, as illustrated in JPH07-168242A, there is known a technology that changes a distance measuring area and a photometrical area into an area suited for a respective photographing range by an apparatus direction of a camera when photographing,

The previous technology is one that recaptures photographing conditions at the time of photographing appropriately when playing. The latter technology is one that optimizes automatically photographing conditions changed in correspondence to apparatus directions at the time of photographing.

On the other hand, in recent years, digital cameras include a shift and setting function of photographing mode or photographing parameters that can change manually or automatically set photographing parameters by experiences or know-how of the photographer and can precisely reflect the intention of the photographer. An example of the photographing mode includes a function that switches over the photographing images to color or black-white images utilizing features unique to digital cameras and a timer setting function that sets a self-timer for photographing delay. In addition, a photographing parameter conditions compensation mode includes functions that shift the setting of ISO sensitivity and exposure compensation level or the like. These functions, despite being manipulated relatively frequently at the time of photographing, have not progressed so far as manipulation methods from the dawn of the digital camera era. That is, there is a method that performs setting by selecting these functions using an exclusively disposed button and a method that reads out a setting menu of these functions from a menu display and performs setting by selecting individually on the menu. Among these setting methods, improvements such as arranging a special button for those functions often used by the user and arranging functions to be placed in higher order of the hierarchy according to frequency of usage within the menu are performed, but in either case pushing a button is required for the manipulations to perform selection and setting, so that consecutiveness is lacking at the time of photographing, photographing is interrupted and in a worst case scenario, a shutter chance is missed.
US 5,625,848 discloses a camera which includes an orientation detection device that detects the orientation of the camera. The camera is controlled on the basis of the detected orientation and photographic settings recorded for that detected orientation.
US 2006/0044399 discloses an imaging system capable of forming images based upon adjustable image capture settings and a viewing frame. The image capture settings are set on the basis of the distance between the user and the viewing frame as detected by the imaging system.
An aim of the present invention is to provide an image pickup apparatus and an image pickup control method that can perform change of settings of each kinds of photographing mode and detailed photographing conditions without affecting the consecutiveness of the photographing movements.
To accomplish the above aim, the present invention provides an image pickup apparatus as defined in the appended claims.
The present invention is described below with reference to exemplary embodiments and the accompanying drawings in which:
FIG. 1 is a diagram that illustrates a constitutional example of hardware of an image pickup apparatus according to the present invention.
FIG. 2 is a flow chart that illustrates an embodiment of an image pickup apparatus according to the present invention.
FIG. 3 is a flow chart that illustrates an embodiment of an image pickup apparatus according to the present invention.
FIG. 4 is a flow chart that illustrates an embodiment of an image pickup apparatus according to the present invention.
FIG. 5 is a flow chart that illustrates an embodiment of an image pickup apparatus according to the present invention.
FIG. 6 is a flow chart that illustrates an embodiment of an image pickup apparatus according to the present invention.
FIG. 7 is a flow chart that illustrates an embodiment of an image pickup apparatus according to the present invention.
FIG. 8 is a flow chart that illustrates a second embodiment of an image pickup apparatus according to the present invention.
FIG. 9 is a flow chart that illustrates a second embodiment of an image pickup apparatus according to the present invention.
FIG. 10 is a flow chart that illustrates a third embodiment of an image pickup apparatus according to the present invention.
FIG. 11 is a flow chart that illustrates a third embodiment of an image pickup apparatus according to the present invention.
FIG. 12 is a flow chart that illustrates another embodiment of an image pickup apparatus according to the present invention.
FIG. 13A to 13C are diagrams that illustrates a state during square mode in which by changing only the held positional directions of a camera, color photographing mode, black and white photographing mode and sepia photographing modes are automatically switched-over.
FIG. 14 is a diagram that illustrates a constitutional example of an image pickup apparatus according to the present invention.
FIG. 15 is a diagram that illustrates a constitutional example of hardware of an image pickup apparatus according to the present invention in which a parameter change prevention device is further disposed.
FIG. 16 is a flow chart corresponding to FIG. 2 in the case a parameter change prevention device is further disposed.
FIG. 17 is a flow chart corresponding to FIG. 5 in the case a parameter change prevention device is further disposed.
FIG. 18A to 18E are diagrams for describing specifically a processing of FIG. 17.
FIG. 19 is a diagram that illustrates a constitutional example of an image pickup apparatus according to the present invention in the case a parameter change prevention device is further disposed.

Preferred embodiments of the present invention will be explained in detail hereinafter with reference to the accompanying drawings.

Conventionally, in order to change the settings of parameters related to imaging such as photographing mode and photographing condition or the like often changed when photographing, even in the case where an exclusive button for setting exists, a mode button has to be pushed multiple times to select and set an appropriate mode, or in the case there is no exclusive button, a manipulation that performs selection and setting by calling out and displaying an appropriate setting mode content from a menu mode is required. In either case, complex operations are required. There are often proposed technologies for simplification by assigning a button that can easily call out a shifting mode but these methods also require an operation procedure that once stops an already held-up ready composure of a camera and once again re-holding up a camera for ready photographing after the button for setting is pushed for selection setting so that consecutiveness of photogenic subject observation and consecutiveness of photographing willingness are inhibited. In a worst case scenario, there are cases of missing a much-awaited shutter chance.

The present invention is made to improve such problems. By focusing on the fact that a photographing screen is approximately the same regardless of whether the held positional directions of a camera are in a vertical direction or in a horizontal direction (when photographing is performed in either held positional direction, the range of photographing does not change) when a mode with approximately equal pixel numbers in the horizontal and vertical directions is set (termed square mode hereinbelow). During the square mode, parameters related to imaging, such as various kinds of photographing modes and photographing conditions or the like, are constituted to be changed in correspondence to apparatus directions (held positional directions) when photographing. Thereby conventionally complex manipulations of button operations or the like are simplified in a state with no side effect like field angle changes so that setting the changes of parameters related to imaging, such as various kinds of photographing modes and photographing conditions or the like, is performed without detracting the consecutiveness of photographing operations.

That is, the present invention utilizes the square mode (photographing images (field angles) of a 6 x 6 format version in a silver salt camera (for example, Hasselblad or the like) or a photographing mode that simulates photographing feelings) installed in a portion of cameras in recent years. An image for recording with approximately the same pixels in the vertical direction and horizontal direction is cut out from a rectangular image created as an original image of a CCD. The fact that photographing field angles (photographing range) in the vertical and horizontal position are approximately the same in a function that performs storage and monitoring display is utilized. A sensor for detecting apparatus directions is further installed. Parameters related to imaging, such as photographing modes and photographing conditions or the like, are automatically set according to detected apparatus directions at the time of imaging with no side effect like field angle changes. Thereby, conventionally complex changes of parameters related to imaging, such as photographing modes and photographing conditions or the like, can be performed easily.

In this way, the present invention intends to simplify the operation methods during particular photographing modes.

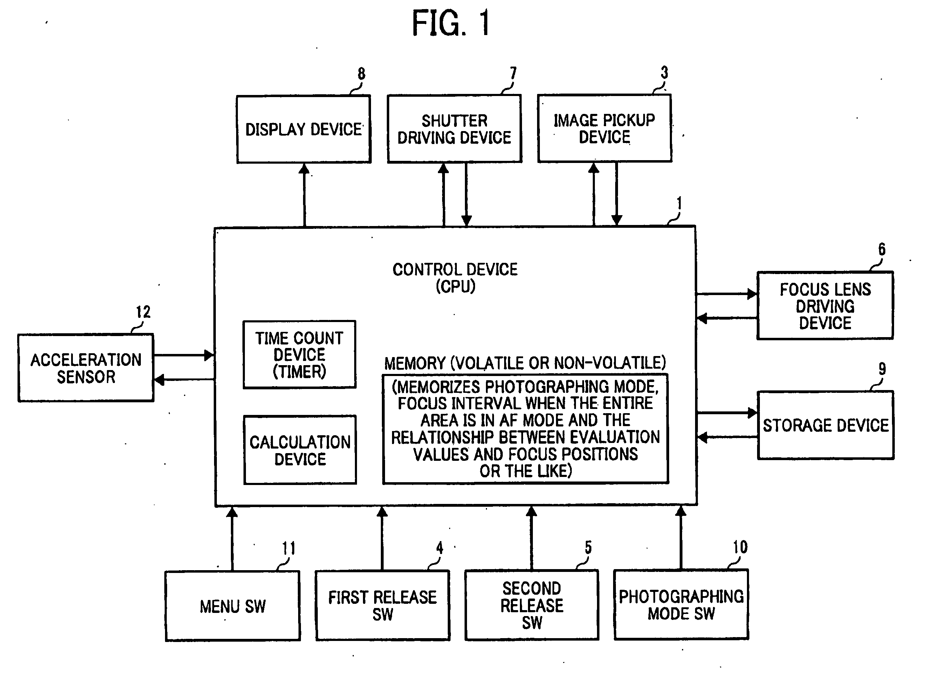

The present invention is described in detail hereinbelow. FIG. 1 is a diagram illustrating a constitutional example of hardware of an image pickup apparatus according to the present invention. In the example of FIG. 1, the image pickup apparatus is a camera. In FIG. 1, a control device 1 (CPU) has a control function that controls the operations of the camera and includes in the interior part, a calculation device for performing various kinds of judgment and calculations, a time count (timer) device for counting time and a volatile or non-volatile memory region or the like that stores various kinds of setting values. The control device 1 can adopt a constitution in which an image processing chip or the like is integrated or can be constituted from a control unit including a plurality of CPUs without using a one chip CPU constitution.

In addition, in the example of FIG. 1, brightness of a plurality of areas is calculated by an image pickup device 3 using a luminance portion of image pickup data of a plurality of areas and inputted to the control device 1. (That is, electrical signals related to brightness of a photogenic subject in a plurality of areas within the photographing range are detected by the image pickup device 3 and inputted to the control apparatus 1). In addition, although not illustrated, instead of the detection by the image pickup device 3, an exclusive photometrical sensor for detecting the brightness of the photogenic subject is disposed (driven by control from the control device 1) to realize a constitution that calculates the brightness of a plurality of areas.

In addition, a first release SW 4 (RL1SW) is a SW that outputs ON signals when a first stage of a release SW for performing photographing is pushed (pushed halfway). In addition, a second release SW 5 (RL2SW) is a SW that outputs ON signals when a second stage of the release SW is pushed (pushed fully). In addition, in the example of FIG. 1, the first release SW 4 (RL1 SW) and the second release SW 5 (RL2SW) are illustrated as separate SW but in a general hardware constitution, the first release SW 4 (RL1SW) and the second release SW 5 (RL2SW) are constituted by the same parts and output ON signals with differences in operation procedures (depth of pushing).

In addition, a focus lens driving device 6 and a shutter driving device 7 are devices that perform focus slide movement (focus driving) and light quantity control movement (shutter driving) respectively for photographing. Within these, the focus lens driving device 6 extracts a high frequency component of the image pickup data from the image pickup device 3 and while obtaining the so-called focusing evaluation values which are materials for focusing determination, scans within the driving range of the focus lens (in the case of a general photographing mode, from the shortest photographing distance to an infinitely far photographing distance in that mode), thereby also fulfilling a role that searches a position that is able to be focused. In addition, the shutter driving device 7 is a mechanism that controls the transmission quantity of light to the image pickup device 3. The constitution of the shutter driving device 7 can be appropriately selected from a constitution of only an electro-shutter, a constitution that combines a shutter that controls separately an aperture and a shutter or a program shutter that opens and closes mechanically with an electro-shutter with control of the image pickup device as well as a constitution using only a mechanical shutter.

In addition, a display device 8 uses liquid crystal, organic EL, LED or the like to perform photogenic subject preparations before still image photographing, a monitoring (through image) display which is an observation movement, a play display of already photographed images, a photographing conditions display, a photographing modes display, a menu display for performing preliminary setting of parameters related to imaging such as apparatus setting or the like, a setting information display and a detected data display. In addition, a memory device 9 converts already photographed image data to a predetermined storage format for memorization and storage and is recording media of a built-in flash memory, a memory card, a HDD or the like.

In addition, the image pickup device 3 is a CCD, a CMOS or the like that converts a photogenic subject image entered via an imaging optical system into electrical signals and inputs to the control device 1. In addition, although not illustrated, in the case the image pickup apparatus is a camera, the image pickup apparatus necessarily includes an imaging optical system (lens). In addition, although not illustrated, the image pickup apparatus can include a zoom optical system (zoom lens) that changes a field angle at the time of photographing.

In addition, a photographing mode SW 10 selects and sets, before photographing, parameters related to imaging such as each kind of photographing mode and photographing condition or the like. The photographing mode SW 10 can adopt a constitution that can select singularly (select and set by pushing a plurality of times) or a constitution that selects and sets in combination with the menu display. Nominally, in the case of changing photographing modes, the switch is termed a photographing mode SW. In the case of setting photographing conditions, the switch can be used as "so-and-so" selection SW in any occasion.

In addition, a menu S W 11 sets the menu display. After the menu display, each kind of setting is performed by an up-and-down, left-and-right SW (not illustrated) and a determination SW (not illustrated) or the like and after the setting, the menu SW 11 helps the camera return to the normal state.

In addition, an acceleration sensor 12 detects a relative speed of acceleration, directions of speed of acceleration, acceleration of gravity, directions of acceleration of gravity or the like. The acceleration sensor 12 is installed in the camera. Electrical output thereof is calculated and determined by the control device 1 so that detection of apparatus directions of the camera or the like can be performed (a horizontal position, vertical positions (a vertical direction in which the right side of the horizontal position viewed from the photographer becomes the bottom, another vertical direction in which the left side becomes the bottom)). In addition, although having no direct relationship with the present invention, general functions considered requiring little explanation such as a power SW, up-and-down, left-and-right SW for menu selection and determination, a zoom SW for performing photographing range (photographing magnification ratio) setting (zoom movement of a zoom lens) or the like are hereby abbreviated for description and illustration.

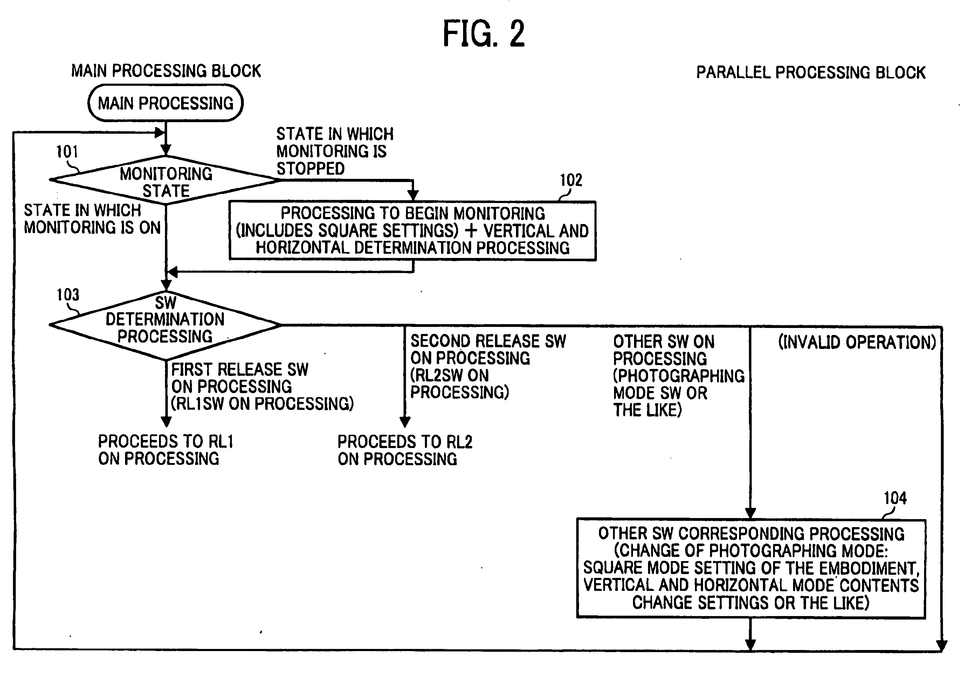

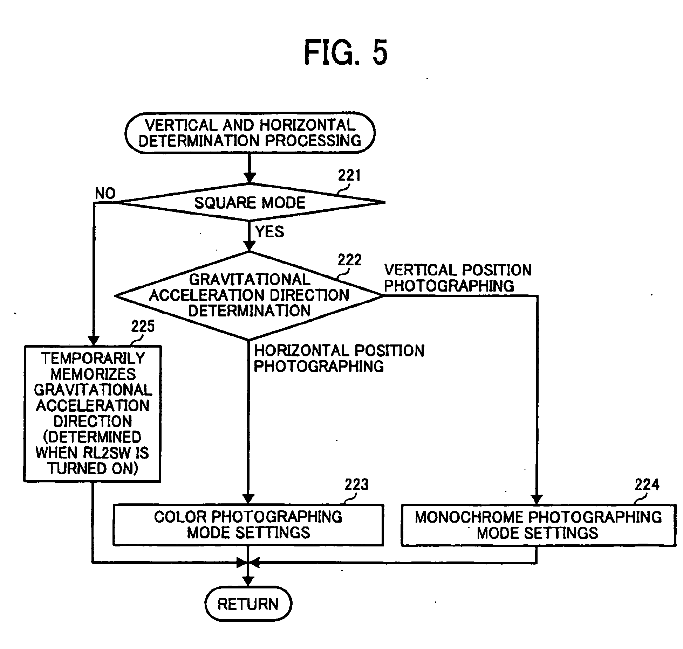

The present invention is described in detail hereinbelow. In addition, the image pickup apparatus hereinbelow is a camera. FIG. 2 through FIG. 5 are flow charts illustrating the first embodiment (in addition, FIG. 5 is a flow chart used in common for not only the first embodiment but also the later-described second and third embodiments).

First, in FIG. 2, when power is turned on, the camera begins monitoring (a processing that repeats imaging and displays consecutively interlaced imaging results according to the capability of the display device) and becomes a photographing ready state (101, 102). In addition, vertical and horizontal determination processing is performed at this time. In this state, the camera continues monitoring and waits for the pushing of the first stage of the release SW (RL1SW) and input signals by other SW.

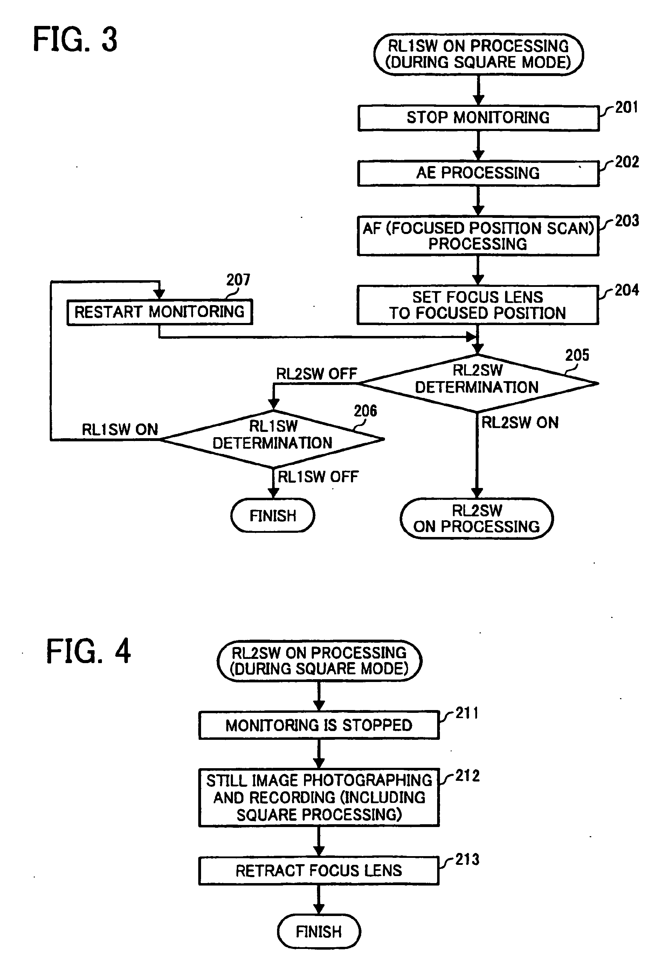

In this state, when the first release SW is pushed, the first release SW ON processing of FIG. 3 is performed. In addition, when the second release SW is pushed, the second release SW ON processing of FIG. 4 is performed. In addition, when a photographing mode button or a menu button is pushed, the corresponding predetermined movements (in this case, preliminary photographing mode selection setting movement and photographing condition selection setting movement by menu) are performed (104).

Then the processing returns to 101 again.

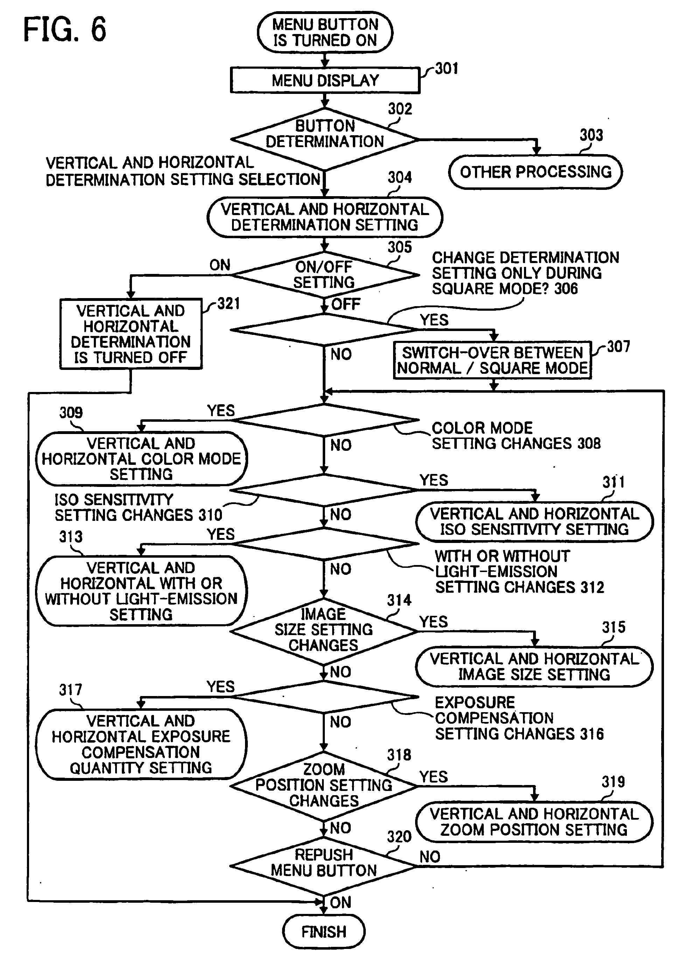

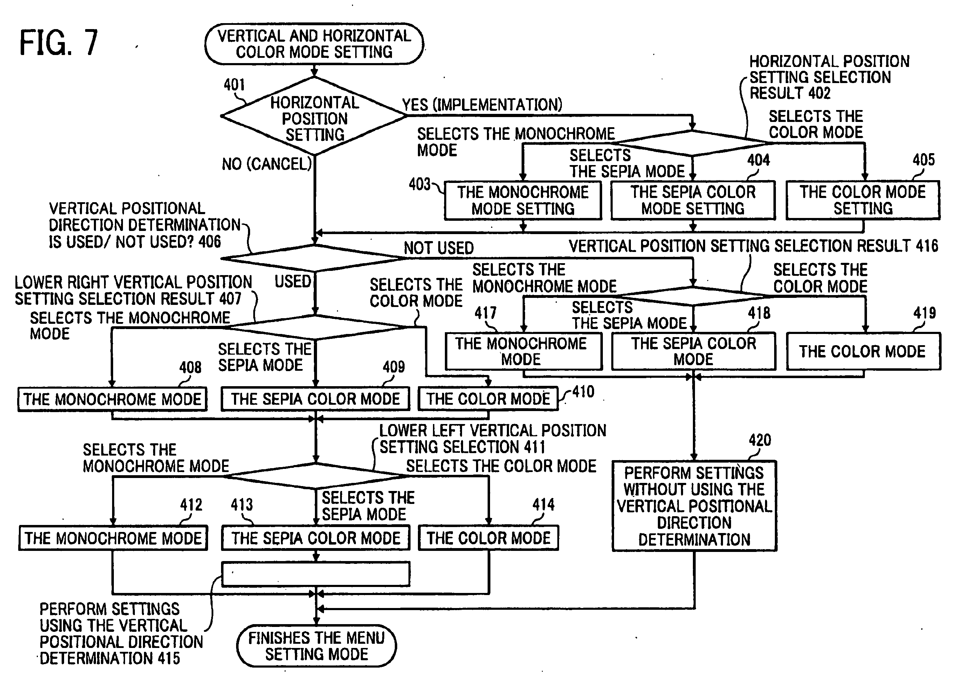

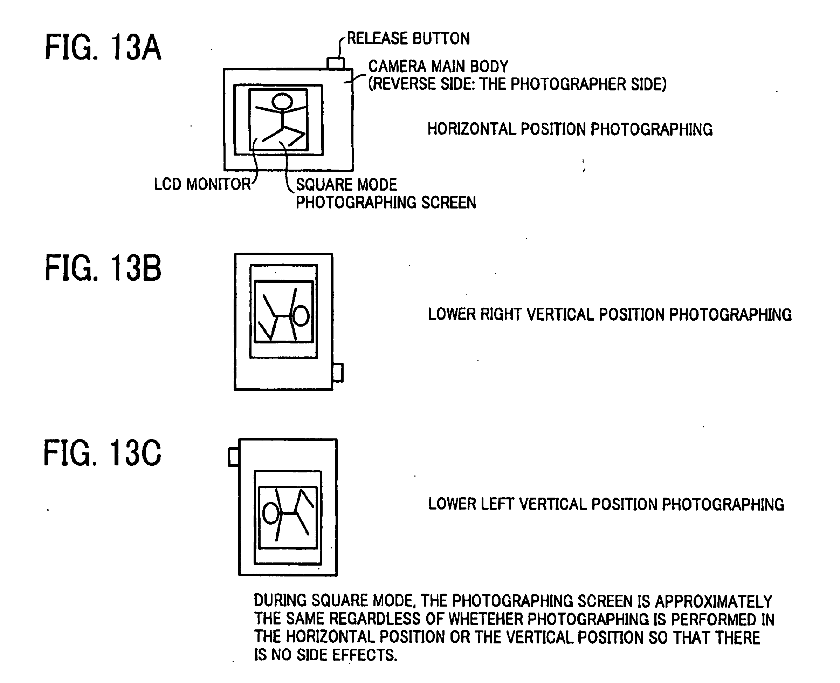

By the way, the present invention requires the square mode (a vertical horizontal ratio of photographing pixels is approximately the same or a screen aspect ratio of photographing images is approximately the same) as a precondition so that a photographing mode button is pushed before photographing for setting to the square mode. An example of the setting of the square mode is illustrated in processing 104 of FIG. 2 in which a photographing mode button (SW) is pushed to realize a constitution that can switch over between the validity or the invalidity of the function itself. In the case photographing is performed under a valid square mode, a photographing mode that sets by automatic switch-over at the time of detection of the vertical and horizontal positions of the camera apparatus and the details of photographing conditions are set preliminarily before photographing. In the first embodiment, color mode setting of the photographing images is changed by the held positional directions of the camera during the square mode. As illustrated in FIG. 6, FIG. 7, "vertical and horizontal color mode setting" (provisional title) is selected in the menu button. A constitution that can set the respective color modes at the horizontal position and vertical positions individually in sequence is adopted. Furthermore, the vertical positions can be set as one position or two positions (a vertical position, (hereinbelow termed lower right vertical position), in which the right side viewed from the photographer during a general horizontal holding posture becomes the bottom, another vertical position, (hereinbelow termed lower left vertical position), in which the left side becomes the bottom). In the case two vertical positions are set, as illustrated in a later-described FIG. 13, color modes can be set individually for the horizontal position, the lower right vertical position and the lower left vertical position respectively. However, the color modes set in the flow chart of the first embodiment are only one setting example. It is not limited to this constitution. It is needless to say that a particular color emphasis mode and a mode that color displays only a particular color or the like can be set. In the first embodiment, as illustrated in FIG. 2 through FIG. 5, a determination of the held positional directions of the camera apparatus (vertical and horizontal determination processing) is performed (104 of FIG. 2) any time during the monitoring operation (intermittent movement on the flow chart of FIG. 2). Color modes are automatically set according to the determination results (222, 223 and 224 of FIG. 5). That is, color mode settings are switched over by changing only the held positional directions of the camera without actually photographing so that the photogenic subject image inside the monitoring image (LCD monitor in the present embodiment) is colorized or turned monochrome (in the case of an embodiment that detects two kinds of vertical positions, sepia is added). By testing various held positional directions, photographing preparation movements are performed, the atmosphere of a photographing screen can be grasped and real photographing can be attempted under a held positional direction deliberately selected in which color mode settings match photographing intentions so that the degree of convenience at the time of photographing is drastically improved.

Hereby operational constitutions of a color photographing mode, a monochrome photographing mode and a sepia photographing mode (a photographing mode in which the whole screen is depicted by the contrasting density of the sepia color) are not directly related to the present invention so that they are described in brevity. After importing images, when converting RGB data into YUV data, Y data is processed as per normal (the same as color processing) but for U and V processing, processing is performed by setting the number count in calculation to 0 (monochrome photographing mode) or calculated with offset (sepia photographing mode) so that the monochrome photographing mode and the sepia photographing mode can be set respectively. It is needless to say that when general processing is performed for all of Y, U, V, color photographing mode (usually, a mode of initial setting) is set.

### (Calculation Examples)

| | |
|---|---|
| Monochrome photographing mode | Y = aR+bG+cB+d is calculated as it is U (also V) = xR+yG+zB+t is calculated by setting to x=y=z=t=0 |
| Sepia photographing mode | Y = aR+bG+cB+d is calculated as it is U (also V) = xR+yG+zB+t is calculated by setting to x=y=z=0, t=a specific value (predetermined offset value) |
| Color photographing (normal) mode | Y (also U and V) = aR+bG+cB+d is calculated |

In the first embodiment, during the monitoring operation before a photographing processing (first stage release SW) is performed, automatic settings of color modes as well as vertical and horizontal positional detections are ready at all times. The photographing processing after the first stage release SW is inputted is the same as a normal photographing operation during the square mode. When the first stage release SW is turned on, AE, AF and a focus driving processing (focusing operation) are performed (202, 203 and 204 of FIG. 3). When the second stage release SW is turned on, a photographing processing, a square processing of an image and a recording processing are performed (212 of FIG. 4). However, the square processing of an image is performed not only before recording but also during monitoring to monitor a photographing image. A portion of an area of an imaging image is cut out for only a portion with the same pixel numbers in the vertical and horizontal directions. Obtained signals are interlaced according to the display capabilities of an LCD display device or the like to be displayed periodically (or cut out after interlace).

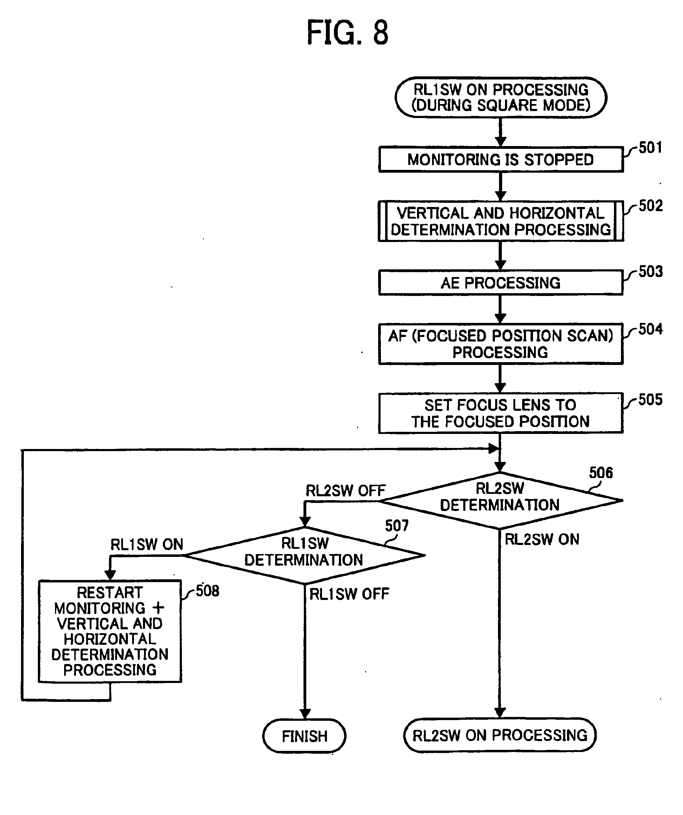

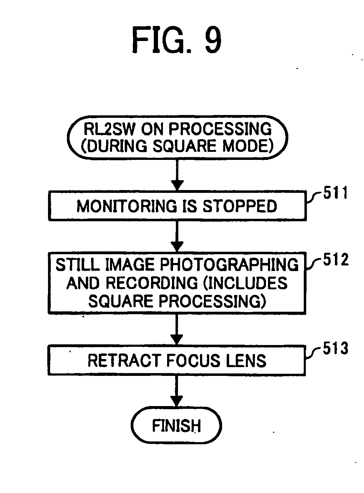

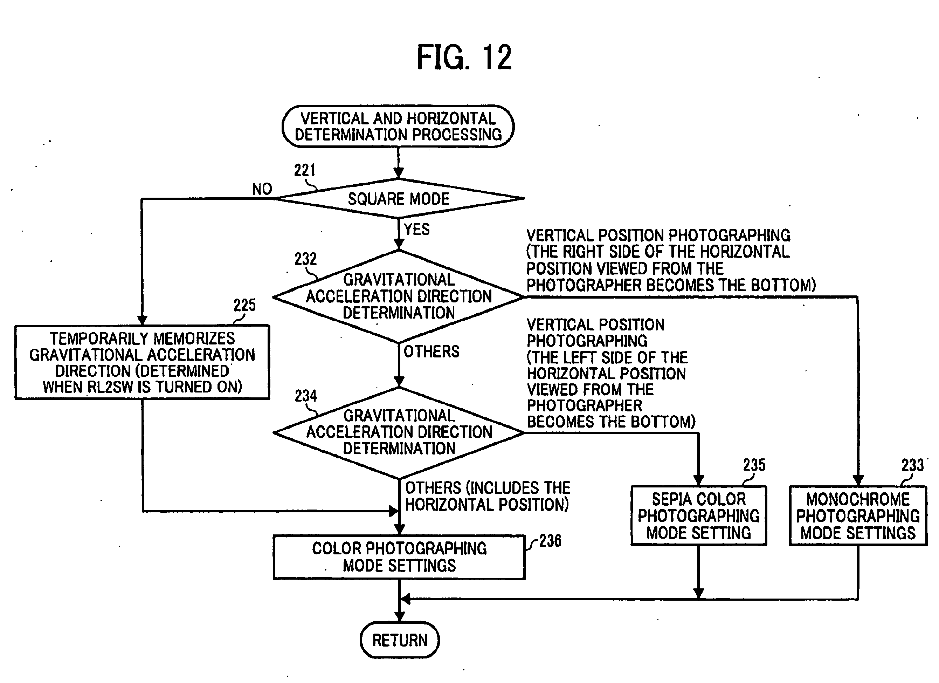

FIG. 8 and FIG. 9 are flow charts illustrating camera controls in a second embodiment. The vertical and horizontal determination processing subroutine in the second embodiment is also the same as the processing of 102 of FIG. 2 of the first embodiment (also identical to the processing of FIG. 5 and the processing of a later described FIG. 12). A preliminary setting processing is the same as the processing of FIG. 6 and FIG. 7 of the first embodiment. In addition, regarding the flow chart of FIG. 2 of the first embodiment, the vertical and horizontal determination processing (the processing of 102 in FIG. 2) during monitoring is not performed in the second embodiment.

] In the second embodiment, the part differing from the first embodiment, as illustrated in 502 of FIG. 8, is that the vertical and horizontal determination processing (vertical and horizontal determination subroutine) is performed not during monitoring but during a release processing (a first stage release processing, that is, a RL1 processing). When the camera is re-held for a different positional direction before pushing the release button, positional detections of the camera apparatus are not performed. Vertical and horizontal positions of the camera are determined in a phase after the first stage of the release button is pushed. As illustrated in FIG. 5 or a later-described FIG. 12, color modes at the time of photographing (color photographing mode, monochrome photographing mode, (sepia photographing mode)) are set. The monitoring screen (monitor of the photographing image) does not change if the camera is only re-held for a different positional direction during photographing preparation so that observation and viewing of the photographing screen for testing of differing held positional directions is not possible. Although in the case when the camera is inclined non-intentionally or the like, the color of the monitoring screen does not change unintentionally. Hereby, vertical and horizontal detections and color mode settings are not repeated a plurality of times during monitoring so that the second embodiment is advantageous from a power consumption viewpoint. In the same way as the first embodiment, the second embodiment also performs vertical and horizontal positional determination and color mode automatic setting operation in the phase after the first stage release SW is pushed so that photographing results become the intended photographing results set preliminary and photogenic subject observation before photographing can be performed to a certain degree (during the time interval from pushing the first stage release SW to when the second stage release SW is pushed) (in the case a constitution that does not stop monitoring processing is adopted in the RL1 processing).

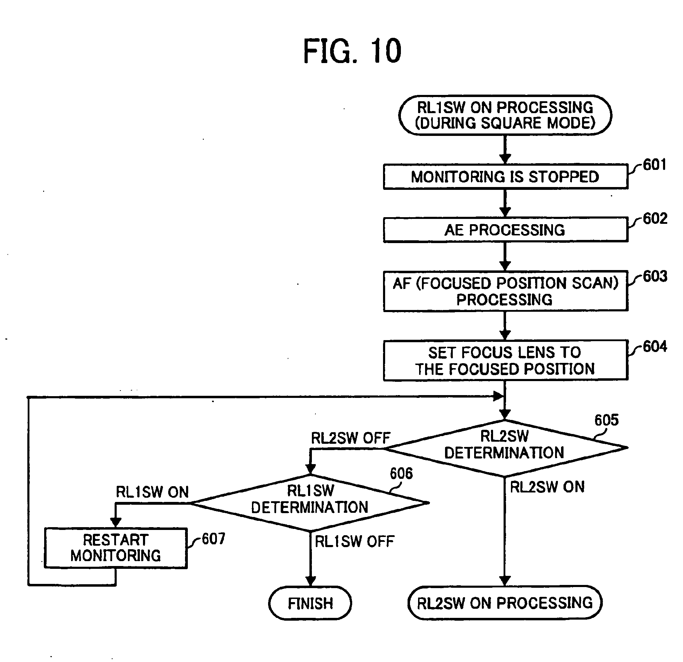

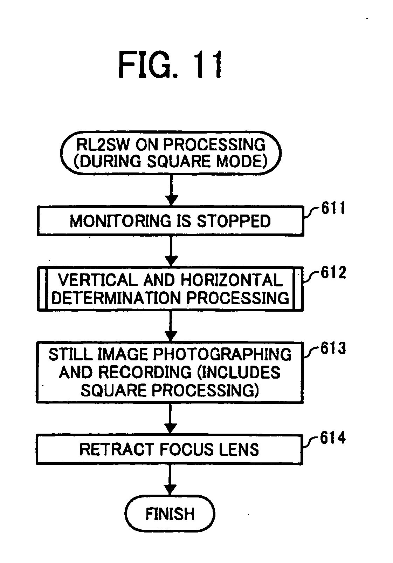

FIG. 10 and FIG. 11 are flow charts illustrating camera controls in a third embodiment. The vertical and horizontal determination processing subroutine in the third embodiment is also the same as the processing of 102 of FIG. 2 of the first embodiment (also identical to the processing of FIG. 5 and the processing of a later described FIG. 12). A preliminary setting processing is the same as the processing of FIG. 6 and FIG. 7 of the first embodiment. In addition, regarding the flow chart of FIG. 2 of the first embodiment, the vertical and horizontal determination processing (the processing of 102 in FIG. 2) during monitoring is not performed in the third embodiment.

In the third embodiment, the part differing from the first embodiment, as illustrated in 612 FIG. 11, is that the vertical and horizontal determination processing (vertical and horizontal determination subroutine) is performed not during monitoring but during a release processing (a second stage release processing, that is, a RL2 processing). When the camera is re-held for a different positional direction before pushing the release button, positional detections of the camera apparatus are not performed. When during a phase after the first stage of the release button is pushed, positional detections of the camera apparatus are also not performed. Vertical and horizontal positions of the camera are determined in a phase after the second stage of the release button is pushed (just before photographing). As illustrated in FIG. 5 or a later-described FIG. 12, color modes at the time of photographing (color photographing mode, monochrome photographing mode, (sepia photographing mode)) are set. As described above, in the third embodiment, when the camera is held before photographing or when only the first stage release SW is pushed, a photogenic subject monitor screen (monitoring) does not change. Therefore, holding the camera for testing of differing held positional directions or confirming color modes while locking the focusing position using the first stage release SW is not possible. To put it in another way, monitoring observation using color images is possible till just before photographing (in the case a constitution that does not stop monitoring processing is adopted in the RL1 processing). In the third embodiment, repetitions of vertical and horizontal positional detections and color mode settings due to repetitions of focusing lock operations by the first stage release SW processing or the like can be prevented so that the third embodiment is most advantageous from a power consumption viewpoint. Vertical and horizontal positional determinations and color mode automatic setting operations are performed also in the third embodiment in a proper way at the time of photographing (when the second stage release SW is pushed) so that photographing results become intended photographing results set preliminarily.

In addition, in the above-described first embodiment through the third embodiment, the vertical and horizontal determination processing (the vertical and horizontal determination subroutine) is comprised from two stages of a vertical stage and a horizontal stage as illustrated in 222, 223 and 224 of FIG. 5. But instead, the vertical and horizontal determination processing (the vertical and horizontal determination subroutine) can be comprised from a total of three stages. The first stage is a vertical position, (lower right vertical position), in which the right side viewed from the photographer during a general horizontal holding posture becomes the bottom. The second stage is another vertical position, (lower left vertical position), in which the left side becomes the bottom. The third stage is a horizontal position. In the case of using the vertical and horizontal determination processing of FIG. 12, positional determinations of the camera apparatus can be detected in these three stages and increased functionality in comparison to the case of two stages is realized. Furthermore, as long as the square mode is used, the photographing range (field angle) is approximately the same and does not change even in the lower right vertical position and the lower left vertical position so that by changing only the held positional directions of the camera, three kinds of photographing modes, that is, the color photographing mode, the monochrome photographing mode and the sepia photographing mode or the like can be changed automatically.

FIG. 13A, 13B and 13C are figures illustrating the situation in which the color photographing mode, the monochrome photographing mode and the sepia photographing mode are automatically changed by changing only the held positional directions of the camera to the horizontal position, the lower right vertical position and the lower left vertical position respectively. In the present invention, as illustrated in FIG. 13A, 13B and 13C, during the square mode, the color photographing mode, the monochrome photographing mode and the sepia photographing mode can be automatically changed by changing only the held positional directions of the camera to the horizontal position, the lower right vertical position and the lower left vertical position respectively so that photographing mode changes that are complex conventionally become extremely easy (a sensor for detecting apparatus direction is installed so that photographing modes can be set automatically according to the detected apparatus directions at the time of imaging without side effects such as field angle changes).

Furthermore, the present invention can be applied to set various kinds of photographing conditions of the camera (not only setting photographing modes but also applied to set various kinds of photographing conditions or the like so that the degree of convenience is further improved). That is, if a constitution that can perform automatic settings in the three stages of vertical and horizontal directions is adopted, instead of the color photographing mode, the monochrome photographing mode and the sepia photographing mode settings described in each embodiment above (the vertical and horizontal determination part and the preliminary setting part), various photographing conditions described hereinbelow (that is, photographic sensitivity, flash light-emitting mode, self-timer mode, exposure compensation quantity, zoom magnification, white balance) are set so that a constitution that can easily change parameters of various photographing conditions or the like without any side effect (without changing photographing field angle) can be adopted.

That is, in a first example, the held positional directions can be applied to an ISO sensitivity (imaging sensitivity). The horizontal position can be set to ISO 100, the lower right vertical position can be set to ISO400 and the lower left vertical position can be set to ISO1600 or the like.

In addition, in a second example, the held positional directions can be applied to a flash light-emitting mode. That is, the held positional directions are applied to flash control where light emission is prevented in the horizontal position, the lower right vertical position can be set to automatic light emission and the lower left vertical position can be set to forced light emission or the like.

In addition, in a third example, the held positional directions can be applied to a self-timer mode. That is, the held positional directions are applied to self-control where the horizontal position is set to a standard, the lower right vertical position is set to two seconds self-timer and the lower left vertical position is set to ten seconds self-timer or the like.

In addition, in a fourth example, the held positional directions can be applied to an exposure compensation quantity control. That is, the horizontal position is set to no compensation, the lower right vertical position is set to +0.5EV compensation and the lower left vertical position is set to 0.5EV compensation or the like.

In addition, in a fifth example, the held positional directions can be applied to a zoom magnification control where the horizontal position is set to a wide position, the lower right vertical position is set to a mean position and the lower left vertical position is set to a telephoto position or the like.

In addition, in a sixth example, the held positional directions can be applied to a WB (white balance) control where the horizontal position is set to a standard, the lower right vertical position is set to a red emphasis and the lower left vertical position is set to a blue emphasis or the like.

The setting examples described above are only examples and the present invention is not limited to the above setting items or values. Other kinds of settings such as scene modes (normal, scenery, night view or the like), shutter speed (normal, high speed, low speed or the like), aperture values (normal, open, small aperture or the like), macro modes (normal, macro mode, far distance mode or the like), image sizes (during the square mode, for large size printing, for small size printing, for web or the like), manual focus positions (AF, shortest, 2 meters or the like), camera shake prevention functions (present, weak, strong or the like) and so on can be possibly applied for implementation.

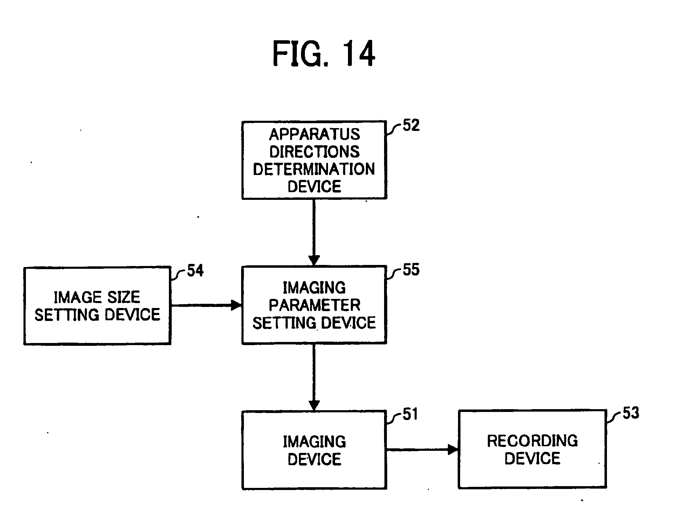

FIG. 14 is a diagram that illustrates a constitutional example of an image pickup apparatus of the present invention described above. Referring to FIG. 14, the image pickup apparatus according to the present invention includes an imaging device 51, an apparatus direction determination device 52 that determines the apparatus direction at the time of imaging, a recording device 53 that records in a recording media image data imaged by the imaging device 51, an image size setting device 54 that can set an image to be recorded to have approximately the same pixel numbers in the horizontal and vertical direction and an imaging parameter setting device 55 that can set parameters related to imaging wherein the imaging parameter setting device 55 changes parameters related to imaging by apparatus directions determined by the apparatus direction determination device 52 at the time of imaging while setting the image size to have approximately the same pixel numbers in the horizontal and vertical direction

Hereby, the parameter related to imaging is for example, color mode (for example, the color photographing mode, the monochrome photographing mode and the sepia photographing mode).

Alternatively, the parameter related to imaging is for example, imaging sensitivity.

Alternatively, the parameter related to imaging is for example, flash light-emitting mode.

Alternatively, the parameter related to imaging is for example, self-timer mode.

Alternatively, the parameter related to imaging is for example, exposure compensation quantity.

Alternatively, in the case where a zoom optical system that changes field angles at the time of imaging is disposed in the image pickup apparatus of the present invention, the parameter related to imaging is for example, zoom magnification of the zoom optical system.

Alternatively, the parameter related to imaging is for example, white balance setting values.

As just described, the image pickup apparatus of the present invention includes an imaging device 51, an apparatus direction determination device 52 that determines the apparatus direction at the time of imaging, a recording device 53 that records in a recording media image data imaged by the imaging device 51, an image size setting device 54 that can set an image to be recorded to have approximately the same pixel numbers in the horizontal and vertical direction and an imaging parameter setting device 55 that can set parameters related to imaging wherein the imaging parameter setting device 55 changes parameters (various kinds of photographing modes and photographing conditions) related to imaging by apparatus directions determined by the apparatus direction determination device 52 at the time of imaging while setting the image size to have approximately the same pixel numbers in the horizontal and vertical direction so that parameters (various kinds of photographing modes and photographing conditions) related to imaging can be set automatically by the apparatus directions at the time of photographing without side effects such as field angle changes or the like (becomes possible to perform settings changes of parameters related to imaging without detracting the consecutiveness of the photographing movements) and changes of parameters related to imaging such as photographing modes and photographing conditions or the like that are conventionally complex become extremely easy.

To put it in another way, in the present invention, the fact that during the square mode, photographing screens by horizontal and vertical photographing are approximately the same is utilized. An apparatus direction determination device of an acceleration sensor or the like that can detect the apparatus directions of the image pickup apparatus (for example, a camera) is installed. By changing the held positional directions of the image pickup apparatus (for example, a camera) at the time of photographing, changes of the parameters (changes of photographing modes or photographing conditions) related to imaging can be performed while maintaining the consecutiveness of the photographing consciousness (without detracting the consecutiveness of the photographing movements) and an image pickup apparatus (for example, a camera) with a very high degree of convenience can be realized.

In addition, a constitution without a setting device that sets the square mode (horizontal and vertical pixel numbers are approximately the same or an aspect ratio of an image is approximately 1 : 1) is also considered. In this case, the image pickup apparatus includes an imaging device, an apparatus direction determination device that determines the apparatus direction at the time of imaging, a recording device that records in a recording media image data imaged by the imaging device and an imaging parameter setting device that can set parameters related to imaging wherein the imaging parameter setting device is constituted to automatically change parameters related to imaging by apparatus directions determined by the apparatus direction determination device at the time of imaging. Such a constitution simply utilizes the held positional directions of the image pickup apparatus (for example, a camera) at the time of photographing for setting changes of parameters related to imaging such as photographing mode and photographing conditions or the like (acknowledging side effects such as field angle changes and changes of imaging screen shape). In this case, settings of parameters related to imaging such as photographing modes and photographing conditions or the like can be changed easily by changing only the held positional directions at the time of photographing while preliminarily setting movements at the time of horizontal and vertical detection as well as whether there are or are not automatic settings by horizontal and vertical determination.

In addition, in each constitutional example described above, a display device can be further disposed in which display of the presently set parameters (parameters related to imaging such as photographing modes and photographing conditions or the like) is performed and/or when the parameters are automatically changed by the imaging parameter setting device, display of such changes is performed. Hereby, specifically, a display device 8 of FIG. 1 can be used for such a display device. In the case such a display device is disposed, for example, if the presently set color mode is the color photographing mode, the fact that the color photographing mode is set is displayed. If the presently set color mode is the monochrome photographing mode, the fact that the monochrome photographing mode is set is displayed. In addition, in the case the color mode is automatically changed from the color photographing mode to the monochrome photographing mode, the fact that the color mode is automatically changed from the color photographing mode to the monochrome photographing mode is displayed. In such a way, the photographer can easily grasp the present situation.

In addition, for each constitutional example described above, a constitution of further disposing a parameter change prevention device that prevents automatic changes of the parameters by the imaging parameter setting device when a predetermined operation is performed at the time of apparatus direction changes can be adopted.

In this case, the parameter change prevention device can have a constitution of preventing automatic changes of the parameters by the imaging parameter setting device only when a predetermined operation is performed at the time of apparatus direction changes. In such a constitution, prevention of automatic changes is cancelled after the predetermined operation is performed. Thereby the imaging parameter setting device automatically changes parameters related to imaging by apparatus directions determined by the apparatus direction determination device at the time of imaging. Therefore, in the case a constitution of preventing automatic changes of the parameters by the imaging parameter setting device only when the predetermined operation is performed at the time of apparatus direction changes is adopted, for example, when the horizontal position is preliminarily set to the color mode (a general held positional direction of a camera), the vertical position is set to photographing in the monochrome mode (assigned), when for example changes from the horizontal position to the vertical position are performed, and automatic changes from the color mode to the monochrome mode can be prevented. As a result, the vertical position is set to the color mode. Thereafter when the image pickup apparatus is re-held back to the horizontal position in a state which automatic changes are not prevented, the horizontal position is then set to the monochrome mode so that preliminary assignations can be easily switched-over. In such a way, the function of the present invention that prevents automatic changes of the parameter by the imaging parameter setting device is used only when the predetermined operation is performed at the time of apparatus direction change so that a method that performs photographing while switching over by a simple operation between the color mode photographing and the monochrome mode photographing at the horizontal position becomes possible.

In addition, for the above constitution in which the parameter change prevention device is further disposed, display of the presently set parameters (parameters related to imaging such as photographing modes and photographing conditions) is performed, and/or a display device is further disposed to display the fact that automatic changes of parameters are performed by the imaging parameter setting device or the fact that automatic changes of parameters by the imaging parameter setting device are prevented. In such a way, it can be determined whether there are or are not automatic changes or the changed parameters are displayed in a way able to be perceived by the user so that the photographer can always grasp the present setting situation of parameters as well as whether there are or are not changes thereby improving usability.

As described above, a constitution is adopted in which a parameter changes prevention device is further disposed to prevent automatic changes of parameters by the imaging parameter setting device when the predetermined operation is performed at the time of apparatus direction changes. Thereby parameters related to imaging (various kinds of photographing mode and photographing conditions) can be automatically set by apparatus directions at the time of imaging without side effects such as field angle changes (setting changes of parameters related to imaging can be performed without detracting the consecutiveness of photographing operation) so that changes of parameters related to imaging such as photographing modes and photographing conditions or the like that are conventionally complex become extremely easy. Besides, automatic changes to the preliminary assignations of parameters (various kinds of photographing mode and photographing conditions) can be prevented as needed so that switch-over becomes possible.

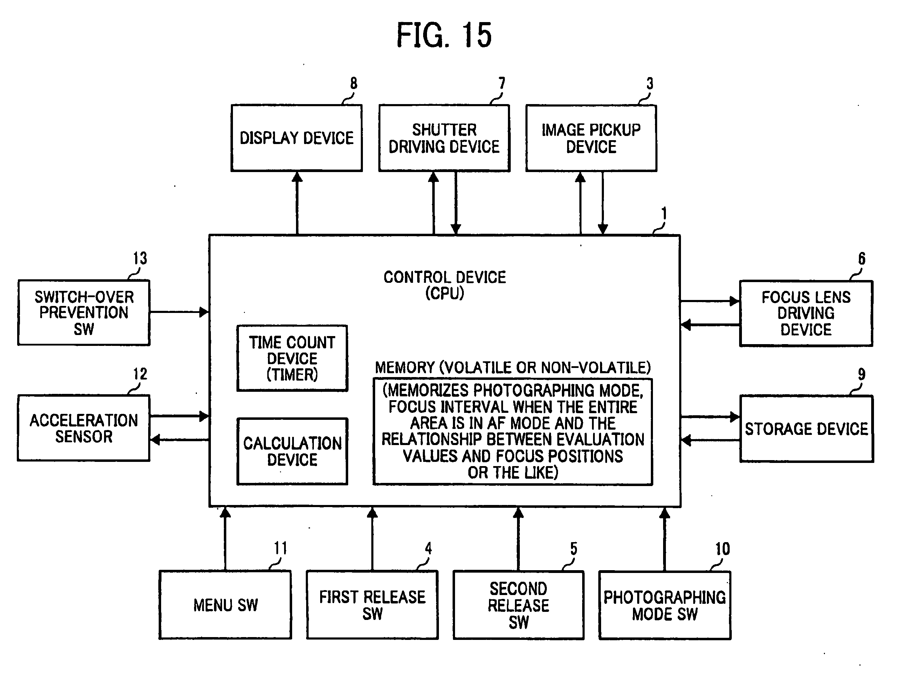

FIG. 15 is a figure that illustrates a constitutional example of hardware of an image pickup apparatus of the present invention in which the parameter changes prevention device described above is further disposed. In addition, in the example of FIG. 15, the image pickup apparatus is a camera. In addition, in the image pickup apparatus of FIG. 15, a switch-over prevention switch 13 is disposed and functions as the above-described parameter changes prevention device. The rest of the constitutions of FIG. 15 are the same as the image pickup apparatus of FIG. 1.

Hereby the switch-over prevention switch 13 is a switch (SW) having a function of preventing automatic changes of parameters related to imaging (various kinds of photographing mode and photographing conditions) due to changes in apparatus directions. When setting automatic changes, if apparatus directions (held positional directions of the camera) are changed while simultaneously pushing the switch-over prevention switch 13, the SW realizes a function that does not allow automatic changes of the parameters related to imaging (a function that prevents automatic changes of the parameters related to imaging). In addition, the switch-over prevention switch 13 is not necessarily an exclusive SW and can be combined with other SW. In addition, constitutions other than switches can be used as the parameter changes prevention device (for example, a photometric sensor is utilized with a constitution in which automatic switch-over is prevented in the case the apparatus direction is changed while simultaneously shielding the lens).

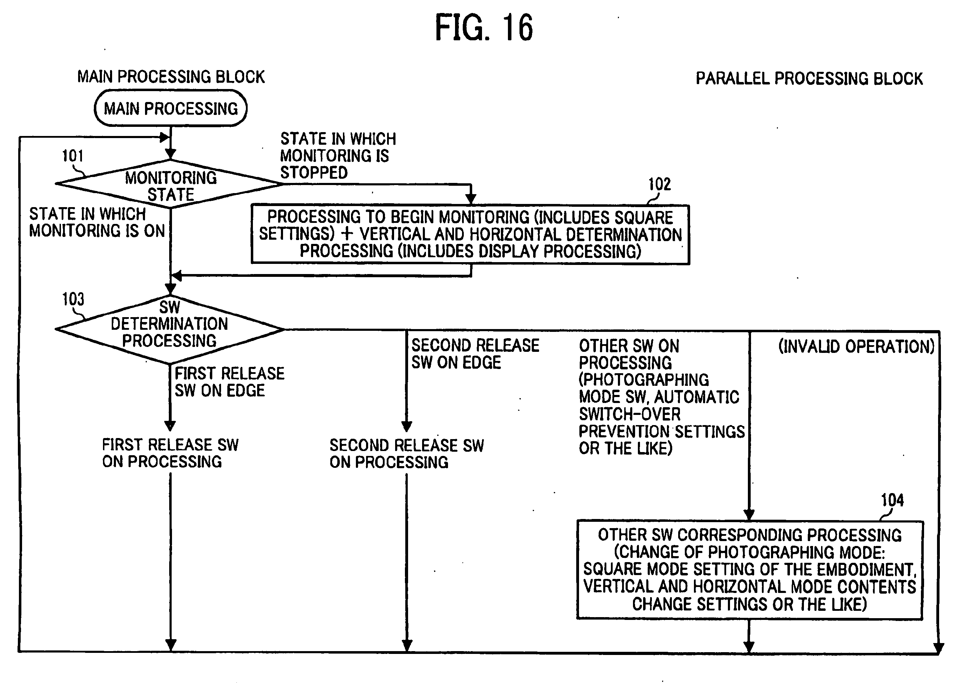

In addition, FIG. 16 is a flow chart corresponding to FIG. 2 in the case the above-described parameter changes prevention device is further disposed. The processing of FIG. 16 is the same as the processing of FIG. 2 except a setting processing to prevent automatic changes of parameters (automatic switch-over) is considered.

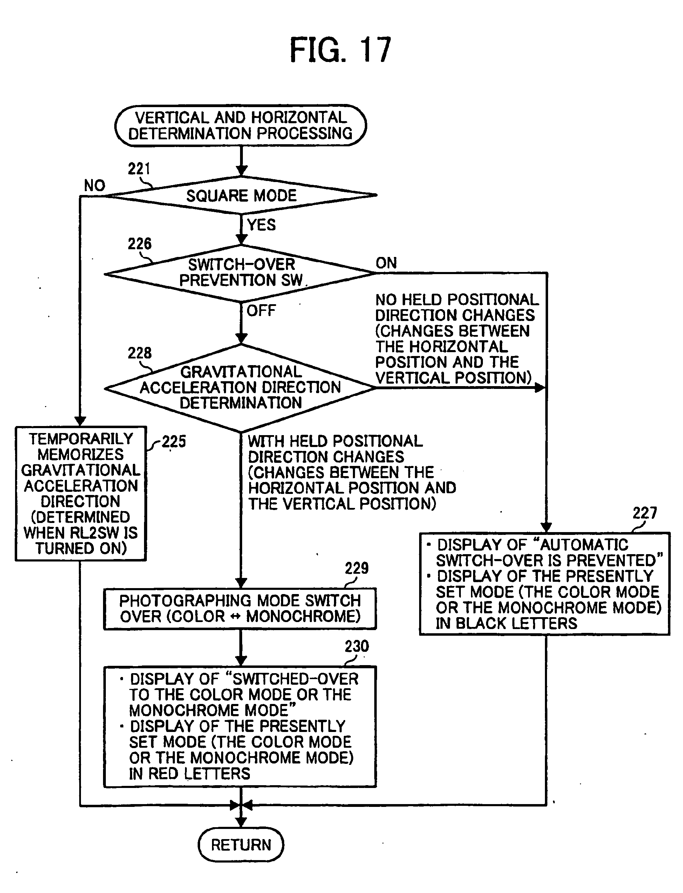

In addition, FIG. 17 is a flow chart corresponding to FIG. 5 in the case where the above-described parameter changes prevention device is further disposed. In particular, the processing in FIG. 17 differs from the processing of FIG. 5 in that processings 226 and 227 implemented when the switch over prevention switch 13 is turned on are added. In addition, the processings 228, 229 and 230 of FIG. 17 generalize the processings 222 and 223 of FIG. 5 (in addition, display processing is also considered in this case).

In the processing example of FIG. 17, the present setting mode and whether automatic settings are performed or not are displayed in correspondence to either the case in which automatic settings are performed or the case in which automatic settings are prevented. With regard to the present setting mode, in the case where automatic changes are performed, red letters are displayed. In the case where automatic changes are not performed, black letters are displayed.

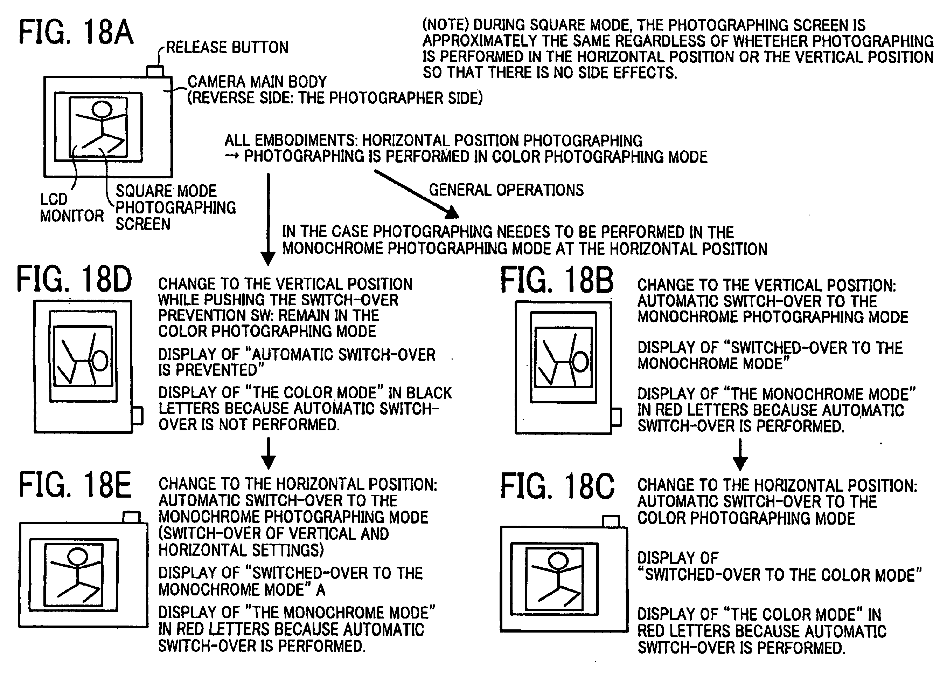

FIG. 18A, 18B, 18C, 18D and 18E are figures of detailed descriptions of the processing of FIG. 17. During initial settings as shown in FIG. 18A, photographing in the horizontal position is in the color photographing mode.

When general operations are performed in the present invention, (for example, when the switch-over prevention switch 13 is not operated), as shown in FIG. 18B, when the apparatus direction is changed from the horizontal position to the vertical position, an automatic change (automatic switch-over) from the color photographing mode to the monochrome photographing mode is performed. A notification of "switched over to the monochrome photographing mode" or the like is displayed in a display apparatus 8 and "the monochrome photographing mode" is also displayed. In addition, these displays are in red letters because of the automatic change (switch-over). Next, as shown in FIG. 18C, when the apparatus direction is changed from the vertical position to the horizontal position, an automatic change (automatic switch-over) from the monochrome photographing mode to the color photographing mode is performed. A notification of "switched over to the color photographing mode" or the like is displayed in the display apparatus 8 and "the color photographing mode" is also displayed. In addition, these displays are in red letters because of the automatic change (switch-over).

In comparison, when photographing needs to be performed in the monochrome photographing mode at the horizontal position, for example, as shown in FIG. 18D, when the apparatus direction is changed from the horizontal position to the vertical position while simultaneously pushing the switch-over prevention switch 13, an automatic change (automatic switch-over) from the color photographing mode to the monochrome photographing mode is prevented and the state of the color photographing mode is still maintained. At this moment, a notification of "automatic change (switch-over) is prevented" or the like is displayed in the display apparatus 8 and "the color photographing mode" is also displayed. In addition, these displays are in black letters because the automatic change (switch-over) is not performed. Next, as shown in FIG. 18E, when the apparatus direction is changed from the vertical position to the horizontal position without pushing the switch-over prevention switch 13, an automatic change (automatic switch-over) from the color photographing mode to the monochrome photographing mode is performed. A notification of "switched over to the monochrome photographing mode" or the like is displayed in a display apparatus 8 and "the monochrome photographing mode" is also displayed. In addition, these displays are in red letters because of the automatic change (switch-over).

As described above, in the case the parameter changes prevention device is further disposed, preliminary switch-over of parameters (photographing modes in the example of FIG. 18A, 18D and 18E) becomes possible.

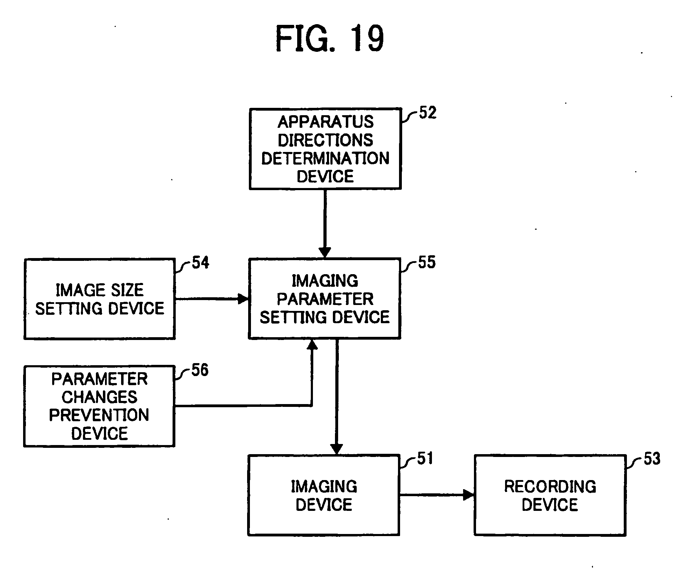

FIG. 19 is a figure that illustrates a constitutional example of an image pickup apparatus according to the present invention in the case where the parameter changes prevention device is further disposed. Referring to FIG. 19, the image pickup apparatus according to the present invention in the case where the parameter changes prevention device is further disposed includes a parameter changes prevention device 56 in addition to the constitutions of FIG. 14.

In the constitution of FIG. 19, by further disposing the parameter changes prevention device 56, in addition to the effects of the cases with no parameter changes prevention device 56, automatic changes to the preliminary assignations of parameters (various kinds of photographing mode and photographing conditions) can be prevented as needed so that switch-over becomes possible.

As described above, in the present invention, apparatus directions at the time of imaging are determined. Parameters related to imaging (various kinds of photographing mode and photographing conditions) are automatically changed by the determined apparatus directions at the time of imaging while image size is set to have approximately the same pixel numbers in the vertical and horizontal direction so that setting changes of parameters related to imaging (various kinds of photographing mode and photographing conditions) can be performed without detracting the consecutiveness of the photographing operations.

In particular, changes of color modes, changes of ISO sensitivity and changes of WB (white balance) are possible setting items not found in a silver salt camera but only in a digital camera as functions having a high degree of convenience. Changes at the present moment require interruption once of the photographing operations (look away from the photogenic subject) in which a menu button is pushed to call out functions and then setting selections are performed. Photographing is conducted only thereafter by re-holding the camera so that there is a high possibility of missing the shutter chance. In the present invention, settings changes of the desired parameters (parameters related to imaging such as various kinds of photographing mode and photographing conditions) can be performed without looking away from the photogenic subject so that the present invention is advantageous in that no shutter chance is missed.

Furthermore, in the present invention, whether the presently set parameters are displayed, and/or the fact that automatic changes are performed is displayed when automatic changes of the parameters are performed by the imaging parameter setting device so that the photographer can easily grasp the present situation.

In addition, in the present invention, automatic changes of parameters are prevented by performing the predetermined operation at the time of apparatus direction changes so that automatic changes to the preliminary assignations of parameters (various kinds of photographing mode and photographing conditions) can be prevented as needed and switch-over becomes possible.

In particular, whether the presently set parameters are displayed, and/or the fact that automatic changes of the parameters are performed is displayed or the fact automatic changes of the parameters are prevented is displayed so that the photographer can always grasp the present setting situation of parameters as well as whether there are or are not changes thereby improving usability.

## Claims

1. An image pickup apparatus, comprising:
an imaging device (51),
an apparatus direction determination device (52) configured to determine whether the apparatus is held in a vertical or a horizontal position when imaging,
a recording device (53) configured to record image data imaged by the imaging device (51) in a recording media,
an image size setting device (54) configured to set an aspect ratio of an image to be recorded; and
an imaging parameter setting device (55) configured to set parameters related to imaging,
**characterised in that** the imaging parameter setting device (55) is configured to automatically change a colour mode of the apparatus based upon the apparatus position determined by the apparatus direction determination device (52) if the aspect ratio of the image has been set to about 1:1 or a square mode by the imaging parameter setting device.

2. An image pickup apparatus according to Claim 1, further comprising:
wherein the apparatus direction determination device (52) further determines whether the apparatus is in a lower right vertical position in which the right side viewed from a photographer becomes the bottom, or a lower left vertical position in which the left side viewed from the photographer becomes the bottom, and
wherein the imaging parameter setting device (55) automatically changes colour mode based upon three positions of the apparatus, among the horizontal position, the lower right vertical position, and the lower left vertical position.

3. An image pickup apparatus according to Claim 1 or 2, further comprising:
a display device (8) configured to display the presently set mode and/or the fact that automatic changes are performed when automatic changes of the mode are performed by the imaging parameter setting device (55).

4. An image pickup apparatus according to Claim 1, 2 or 3, further comprising:
a parameter changes prevention device (56) configured to prevent automatic changes of the colour mode by the imaging parameter setting device (55) by performing a predetermined operation at the time of apparatus direction changes.

5. An image pickup apparatus according to Claim 4, wherein
the parameter changes prevention device (56) is configured to prevent automatic changes of the colour mode by the imaging parameter setting device (55) only when the predetermined operation is performed at the time of apparatus direction changes.

6. An image pickup apparatus according to Claim 4 or Claim 5, further comprising:
a display device (8) configured to display the presently set mode and/or the fact that automatic changes of the colour mode are performed by the imaging parameter setting device (55) or the fact that automatic changes of the colour mode by the imaging parameter setting device (55) are prevented.

7. An image pickup control method wherein
determination of whether the apparatus is held in a vertical or horizontal position for imaging is performed; and
a colour mode is automatically changed according to the determined apparatus direction at the time of imaging if an aspect ratio of an image has been set to about 1:1 or a square mode.

8. An image pickup control method according to Claim 7, wherein
the presently set mode is displayed and/or the fact that automatic changes are performed is displayed when automatic changes of the mode are performed.

9. An image pickup control method according to Claim 7 or 8, wherein
automatic changes of the mode are prevented when a predetermined operation is performed at the time of apparatus direction changes.

10. An image pickup control method according to Claim 9, wherein
automatic changes of the mode are prevented only when the predetermined operation is performed at the time of apparatus direction changes.

11. An image pickup control method according to Claim 9 or 10, wherein
the presently set mode is displayed and/or the fact that automatic changes of the mode are performed is displayed or the fact that automatic changes of the mode are prevented is displayed.

## Patentansprüche

1. Bildaufnahmevorrichtung, die umfasst:
eine Abbildungseinrichtung (51),
eine Einrichtung (52) zum Bestimmen der Ausrichtung der Vorrichtung, die konfiguriert ist zu bestimmen, ob die Vorrichtung während des Abbildens in vertikaler oder horizontaler Position gehalten wird,
eine Aufzeichnungseinrichtung (53), die konfiguriert ist, die Bilddaten, die durch die Abbildungseinrichtung (51) abgebildet werden, in einem Aufzeichnungsmedium aufzuzeichnen,
eine Einrichtung (54) zum Einstellen der Bildgröße, die konfiguriert ist, ein Seitenverhältnis eines Bildes, das aufgezeichnet werden soll, einzustellen; und
eine Einrichtung (55) zum Einstellen der Abbildungsparameter, die konfiguriert ist, Parameter im Zusammenhang mit dem Abbilden einzustellen,
**dadurch gekennzeichnet, dass** die Einrichtung (55) zum Einstellen der Abbildungsparameter konfiguriert ist, auf der Grundlage der Position der Vorrichtung, die von der Einrichtung (52) zum Bestimmen der Ausrichtung der Vorrichtung bestimmt wurde, wenn das Seitenverhältnis des Bildes von der Einrichtung zum Einstellen der Abbildungsparameter auf etwa 1:1 oder auf eine quadratische Betriebsart eingestellt wurde, automatisch eine Farbbetriebsart der Vorrichtung zu ändern.

2. Bildaufnahmevorrichtung nach Anspruch 1,
wobei die Einrichtung (52) zum Bestimmen der Ausrichtung der Vorrichtung ferner bestimmt, ob sich die Vorrichtung in einer unteren rechten vertikalen Position, in der die aus Sicht des Photographen rechte Seite zur Unterseite wird, oder in einer unteren linken vertikalen Position, in der die aus Sicht des Photographen linke Seite zur Unterseite wird, befindet, und
wobei die Einrichtung (55) zum Einstellen der Abbildungsparameter auf der Grundlage von drei Positionen der Vorrichtung unter der horizontalen Position, der unteren rechten vertikalen Position und der unteren linken vertikalen Position automatisch die Farbbetriebsart ändert.

3. Bildaufnahmevorrichtung nach Anspruch 1 oder 2, die ferner umfasst:
eine Anzeigeeinrichtung (8), die konfiguriert ist, die gegenwärtig eingestellte Betriebsart und/oder die Tatsache, dass automatische Änderungen ausgeführt werden, wenn automatische Änderungen der Betriebsart durch die Einrichtung (55) zum Einstellen der Abbildungsparameter ausgeführt werden, anzuzeigen.

4. Bildaufnahmevorrichtung nach Anspruch 1, 2 oder 3, die ferner umfasst:
eine Einrichtung (56) zum Verhindern von Parameteränderungen, die konfiguriert ist, um automatische Änderungen der Farbbetriebsart durch die Einrichtung (55) zum Einstellen der Abbildungsparameter zu verhindern, indem sie eine vorgegebene Funktion zur Zeit der Änderung der Ausrichtung der Vorrichtung ausführt.

5. Bildaufnahmevorrichtung nach Anspruch 4, wobei
die Einrichtung (56) zum Verhindern von Parameteränderungen konfiguriert ist, automatische Änderungen der Farbbetriebsart durch die Einrichtung (55) zum Einstellen der Abbildungsparameter nur dann zu verhindern, wenn die vorgegebene Funktion zur Zeit der Änderung der Ausrichtung der Vorrichtung ausgeführt wird.

6. Bildaufnahmevorrichtung nach Anspruch 4 oder Anspruch 5, die ferner umfasst:
eine Anzeigeeinrichtung (8), die konfiguriert ist, die gegenwärtig eingestellte Betriebsart und/oder die Tatsache, dass automatische Änderungen der Farbbetriebsart durch die Einrichtung (55) zum Einstellen der Abbildungsparameter ausgeführt werden, oder die Tatsache, dass automatische Änderungen der Farbbetriebsart durch die Einrichtung (55) zum Einstellen der Abbildungsparameter verhindert werden, anzuzeigen.

7. Bildaufnahmesteuerverfahren, wobei
die Bestimmung ausgeführt wird, ob die Vorrichtung zum Abbilden in vertikaler oder horizontaler Position gehalten wird; und
eine Farbbetriebsart automatisch entsprechend der bestimmten Ausrichtung der Vorrichtung zur Zeit des Abbildens, wenn ein Seitenverhältnis eines Bildes auf etwa 1:1 oder eine quadratische Betriebsart eingestellt wurde, geändert wird.

8. Bildaufnahmesteuerverfahren nach Anspruch 7, wobei
die gegenwärtig eingestellt Betriebsart und/oder die Tatsache, dass automatische Änderungen ausgeführt werden, wenn automatische Änderungen der Betriebsart ausgeführt werden, angezeigt werden.

9. Bildaufnahmesteuerverfahren nach Anspruch 7 oder 8, wobei
automatische Änderungen der Betriebsart verhindert werden, wenn eine vorgegebene Funktion zur Zeit der Änderung der Ausrichtung der Vorrichtung ausgeführt wird.

10. Bildaufnahmesteuerverfahren nach Anspruch 9, wobei
automatische Änderungen der Betriebsart nur verhindert werden, wenn die vorgegebene Funktion zur Zeit der Änderung der Ausrichtung der Vorrichtung ausgeführt wird.

11. Bildaufnahmesteuerverfahren nach Anspruch 9 oder 10, wobei
die gegenwärtig eingestellt Betriebsart und/oder die Tatsache, dass automatische Änderungen ausgeführt werden, oder die Tatsache, dass automatische Änderungen verhindert werden angezeigt werden.

## Revendications

1. Dispositif de prise d'images, qui comprend :
un dispositif d'imagerie (51),
un dispositif de détermination de direction d'appareil (52) configuré pour déterminer si l'appareil est tenu en position verticale ou horizontale lors de la prise d'images,
un dispositif d'enregistrement (53) configuré pour enregistrer les données d'image saisies par le dispositif d'imagerie (51) sur un support d'enregistrement,
un dispositif de réglage de la taille des images (54) configuré pour définir un rapport d'aspect d'une image à enregistrer ; et
un dispositif de réglage de paramètre d'imagerie (55) configuré pour définir des paramètres liés à l'imagerie,
**caractérisé en ce que**
le dispositif de réglage de paramètres d'imagerie (55) est configuré pour changer automatiquement un mode de couleur de l'appareil sur la base de la position de l'appareil déterminée par le dispositif de détermination de direction d'appareil (52), si le rapport d'aspect de l'image a été défini à environ 1:1 ou en mode « carré » par le dispositif de réglage de paramètres d'imagerie.

2. Dispositif de prise d'images selon la revendication 1, dans lequel :
le dispositif de détermination de direction d'appareil (52) détermine en outre si l'appareil est en position verticale inférieure droite dans laquelle le côté droit (du point de vue du photographe) devient le bas, ou en position verticale inférieure gauche dans laquelle le côté gauche (du point de vue du photographe) devient le bas, et
dans lequel le dispositif de réglage de paramètres d'imagerie (55) change automatiquement le mode de couleur sur la base de trois positions de l'appareil, parmi la position horizontale, la position verticale inférieure droite, et la position verticale inférieure gauche.

3. Dispositif de prise d'images selon la revendication 1 ou 2, qui comprend en outre :
un dispositif d'affichage (8) configuré pour afficher le mode actuel et/ou le fait que des changements automatiques soient effectués lorsque des changements automatiques du mode sont effectués par le dispositif de réglage de paramètres d'imagerie (55).

4. Dispositif de prise d'images selon la revendication 1, 2 ou 3, qui comprend en outre :
un dispositif de prévention de changement de paramètres (56) configuré pour empêcher tout changement automatique du mode de couleur par le dispositif de réglage de paramètres d'imagerie (55) en effectuant une opération prédéterminée au moment du changement de direction de l'appareil.

5. Dispositif de prise d'images selon la revendication 4, dans lequel
le dispositif de prévention de changement de paramètres (56) est configuré pour empêcher tout changement automatique du mode de couleur par le dispositif de réglage de paramètres d'imagerie (55) uniquement lorsque l'opération prédéterminée est effectuée au moment des changements de direction de l'appareil.

6. Dispositif de prise d'images selon la revendication 4 ou 5, qui comprend en outre :
un dispositif d'affichage (8) configuré pour afficher le mode actuel, et/ou le fait que des changements de mode de couleur automatiques soient effectués par le dispositif de réglage de paramètres d'imagerie (55), ou le fait que des changements de mode de couleur automatiques par le dispositif de réglage de paramètres d'imagerie (55) soient empêchés.

7. Procédé de contrôle de prise d'images dans lequel
il est déterminé si l'appareil est tenu en position verticale ou horizontale pour l'imagerie ; et **caractérisé en ce que**
un mode de couleur est automatiquement changé selon la direction de l'appareil déterminée au moment de l'imagerie si le rapport d'aspect d'une image a été défini sur 1:1 ou en mode « carré ».

8. Procédé de contrôle de prise d'images selon la revendication 7, dans lequel
le mode actuel est affiché, et/ou le fait que des changements automatiques soient effectués est affiché lorsque des changements automatiques du mode sont en cours.

9. Procédé de contrôle de prise d'images selon la revendication 7 ou 8, dans lequel les changements de mode automatiques sont empêchés lorsqu'une opération prédéterminée est effectuée au moment du changement de direction de l'appareil.

10. Procédé de contrôle de prise d'images selon la revendication 9, dans lequel
les changements de mode automatiques sont empêchés uniquement lorsque l'opération prédéterminée est effectuée au moment du changement de direction de l'appareil.

11. Procédé de contrôle de prise d'images selon la revendication 9 ou 10, dans lequel
le mode actuel est affiché, et/ou le fait que des changements de mode automatiques soient effectués est affiché, ou le fait que des changements de mode automatiques soient empêchés est affiché.
